Europäisches Patentamt

European Patent Office

Office européen des brevets

(11) Publication number: **0 233 681**
**A2**

# EUROPEAN PATENT APPLICATION

(21) Application number: **87300079.8**

(51) Int. Cl.⁴: **B60K 15/02**

(22) Date of filing: **07.01.87**

(30) Priority: **14.01.86 GB 8600772**

(43) Date of publication of application:
**26.08.87 Bulletin 87/35**

(84) Designated Contracting States:
**AT BE CH DE ES FR GB GR IT LI LU NL SE**

(71) Applicant: **JAGUAR CARS LIMITED**
**Browns Lane**
**Allesley Coventry CV5 9DR West**
**Midlands(GB)**

(72) Inventor: **Robertson, Gary Bruce**
**113 Cecily Road**
**Cheylesmore Coventry(GB)**

(74) Representative: **Cundy, Anthony Brian**
**Anthony Cundy & Company 384 Station**
**Road Dorridge**
**Solihull West Midlands B93 8ES(GB)**

(54) **Vehicle fuel tank assembly.**

(57) A vehicle fuel tank assembly comprises a tank - (10), a filler neck (14) leading to the tank, a closure - (15) for the filler neck and an expansion volume within the tank, the expansion volume being adapted to take up fuel more slowly than fuel is fed in through the neck (14) so that on filling all the immediately available volume in the tank with liquid fuel an expansion volume remains in the tank. The expansion volume is provided by a member (18) of open cell foam material within the tank.

FIG. 1.

Xerox Copy Centre

## Vehicle Fuel Tank Assembly

The invention relates to vehicle fuel tank assemblies. Vehicle fuel tanks normally incorporate a small vent (referred to herein as a primary vent) by which vapour pressure built up in the tank by fuel evaporation can escape and by which air can enter the fuel tank to replace fuel as the fuel is used. Alternatively, the vent may be in the form of a pressure valve or a pressure valve and carbon canister. While it is in order for fuel vapour to escape from this vent, the escape of liquid fuel from the vent would be a fire hazard.

Fuel tanks are normally filled with fuel which has been stored underground and is at a temperature of approximately 15°C. A vehicle parked in the sun immediately after filling could have the temperature of its fuel raised to 25°C or higher. This temperature rise expands the fuel and with a full tank could force liquid fuel out through the vent. In the case of a pressurised fuel system, fuel vapour build-up can additionally occur as a result of changes in ambient temperature and due to hot fuel returning to the fuel tank from the engine supply line. To overcome this problem it is normal practice to provide a volume within the tank adapted to take up fuel more slowly than fuel is normally fed in through the filler neck of the tank. Thus on filling all immediately available volume in the tank with liquid fuel an expansion volume remains in the tank. The expansion volume is normally provided by a metal structure forming part of the tank with a restricted lower opening and an upper opening vented to the vapour space in the upper region of the tank. As it is an integral part of the structure of the tank it tends to be relatively costly.

An object of the present invention is to provide a fuel expansion volume in a vehicle fuel tank assembly in a simple manner.

According to the present invention there is provided a vehicle fuel tank assembly comprising a tank, a filler neck leading to the tank, a closure for the filler neck and an expansion volume within the tank adapted to take up fuel more slowly than fuel is fed in through the neck whereby on filling all immediately available volume in the tank with liquid fuel an expansion volume remains in the tank, wherein the expansion volume is provided by a member of open cell foam material within the tank.

Preferably the open cell member is covered with a perforated membrane, the membrane controlling the rate at which the member takes up fuel. Alternatively, the open cell member may have a structure which incorporates restricted openings between cells such that the structure itself controls the rate of takeup of fuel into the volume of the member.

For a better understanding of the present invention and to show more clearly how it may be carried into effect reference will now be made, by way of example, to the accompanying drawings in which:

Figure 1 is a side elevation partly in section of a fuel tank assembly according to the present invention; and

Figure 2 is a plan view corresponding to Figure 1.

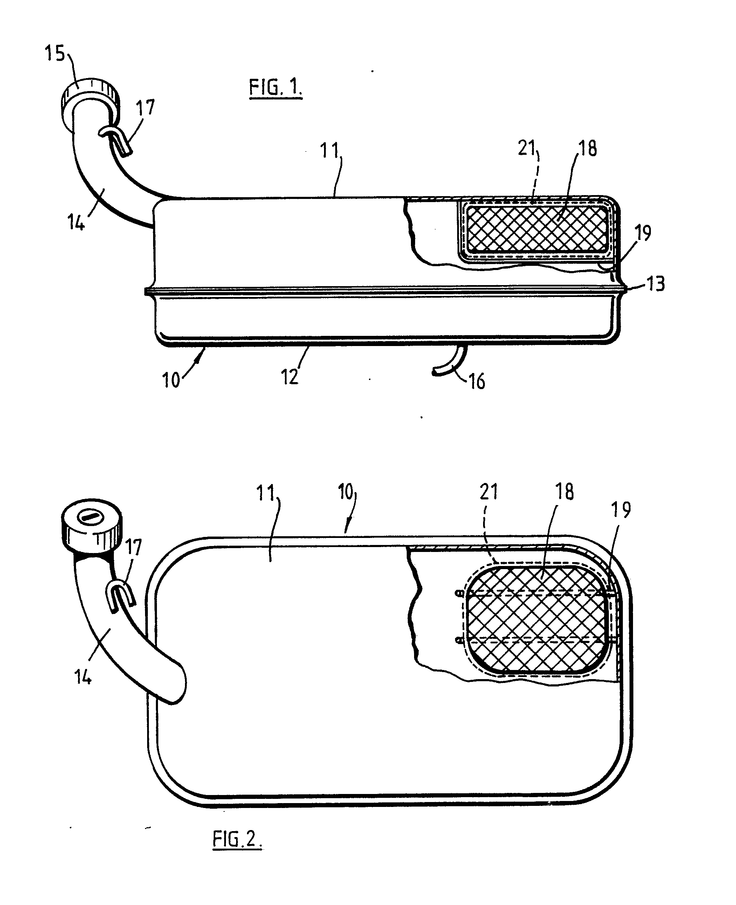

The basic fuel tank 10 as shown in Figure 1 is constructed in a conventional manner from upper and lower steel pressings 11 and 12 joined together by a welded seam 13. Alternatively the basic tank could be of any other structure for example a blow moulding. A filler neck 14 extends upward from one edge of the upper part of the fuel tank and is welded thereto. A removable filler cap 15 closes and seals the upper end of the filler neck. An outlet 16 leads via a fuel pump (not shown) to the engine of the vehicle.

A primary vent 17 is arranged in the filler neck near its upper end. The primary vent is intended always to be above the level of fuel in the tank. When fuel is drawn off through the outlet 16 to the engine, air can enter the tank through the primary vent 17 to occupy the space vacated by the fuel, leaving the interior of the tank at atmospheric pressure. Also, on expansion of the contents of the tank or on vapourisation of fuel as its temperature rises, air or vapour can pass out through the vent 17.

With the fuel tank assembly as thus far described, there is a possibility that the tank could be filled to such an extent that the filler neck is full or almost full of fuel. Typically fuel just added to a fuel tank is at a temperature of about 15°C. Then, the car incorporating the tank could be left to stand and the temperature of the fuel and tank could rise to for example 25°C. The expansion of the contents of the tank would result in part of the contents being expelled through the vent 17. Because the tank is full or almost completely full of liquid fuel, some of this liquid would be expelled through the vent. This results in a fire hazard and is to be avoided. One cannot rely on an instruction to the vehicle user not to fill the tank completely.

In order to overcome this danger the fuel tank assembly is provided with an expansion of volume which contains some air or fuel vapour and which can only be filled with liquid very much more slowly than fuel is normally added to the tank.

To provide this volume, a member 18 of open cell foam material is provided. The member 18 is fixed near the top of the fuel tank by means such as straps 19. Member 18 is formed from a material with sufficiently large openings between cells to allow it to absorb fuel relatively quickly. However, the member 18 is enclosed in a perforated membrane 21. The perforations in the membrane constitute constrictions which restrict the rate at which fuel can enter and air or vapour can leave an expansion volume defined by the member 18.

In use, at the time when fuel is added to the interior of a partially full fuel tank, the member 18 is generally above the level of fuel in the tank with the result that fuel has drained therefrom leaving vapour or air within the member. As the tank is filled, fuel percolates only very slowly into the member 18 with the result that by the time filling has been completed, there is still a substantial volume of air or vapour within the member 18. The tank may for example be filled up to the top of the neck 14. If the vehicle is then parked in a position where the temperature of fuel within the tank is allowed to rise substantially, simultaneously with or in advance of this expansion, fuel percolates into the member 18 and the vapour or air escapes therefrom. The air or vapour works its way into the filler neck 14 and thus occupies the space immediately adjacent the vent 17. Thus, as expansion occurs, the air or vapour and not the liquid fuel is forced out through the vent 17.

As an alternative to a member 18 having a freely open pore structure and a perforated membrane to control flow of fuel into the member, the member itself may have an open pore structure with restricted pore openings such that the fuel is absorbed only slowly into the member.

Although Figures 1 and 2 show the vent 17 arranged in the filler neck 14, the vent 17 may be positioned elsewhere on the fuel tank. In the case of a pressurised fuel system the vent 17 is replaced by a pressure valve, or a pressure valve and a carbon canister, which may be positioned at any convenient location on the fuel tank.

An expansion volume is thus made available according to the present invention within the fuel tank assembly to provide a volume of air or fuel vapour which is expelled from the tank on thermal expansion of the fuel and this is achieved without any major structural addition to a basic fuel tank structure.

**Claims**

1. A vehicle fuel tank assembly comprising a tank, a filler neck leading to the tank, a closure for the filler neck and an expansion volume within the tank adapted to take up fuel more slowly than fuel is fed in through the neck whereby on filling all immediately available volume in the tank with liquid fuel an expansion volume remains in the tank, characterised in that the expansion volume is provided by a member (18) of open cell foam material within the tank.

2. A vehicle fuel tank assembly as claimed in Claim 1, characterised in that the open cell member (18) is covered with a perforated membrane (21), the membrane controlling the rate at which the member takes up fuel.

3. A vehicle fuel tank assembly as claimed in Claim 1, characterised in that the open cell member (18) has a structure which incorporates restricted openings between cells such that the structure itself controls the rate of takeup of fuel into the volume of the member.

FIG. 1.

FIG. 2.